Europäisches Patentamt

European Patent Office

Office européen des brevets

(11) Publication number: **0 189 258**
A2

# EUROPEAN PATENT APPLICATION

(21) Application number: 86300137.6

(22) Date of filing: 10.01.86

(51) Int. Cl.⁴: **C 04 B  35/66**, B 22 D  41/02, C 04 B  28/26, C 04 B  35/68, C 04 B  38/00
//
(C04B28/26, 14:06, 14:30, 22:00, 24:02, 24:04, 24:16, 24:30)

(30) Priority: 21.01.85  GB 8501497

(43) Date of publication of application: 30.07.86
Bulletin 86/31

(84) Designated Contracting States: AT BE CH DE FR GB IT LI LU NL SE

(71) Applicant: FOSECO INTERNATIONAL LIMITED, 285 Long Acre, Nechells Birmingham B7 5JR (GB)

(72) Inventor: Barnes, Andrew, 6 Castle Hall Glascote, Tamworth Staffordshire (GB)
Inventor: Flood, James, 4 Lomax Close, Lichfield Staffordshire (GB)
Inventor: Strawbridge, Ian, 38 Norfolk Road, Erdington, B23 6NA West Midlands (GB)

(74) Representative: Warman, Charles Alfred, Group Patents Department Foseco Minsep International Limited 285 Long Acre, Nechells Birmingham B7 5JR (GB)

(54) Refractory compositions.

(57)  A self-setting, foamed, basic refractory composition comprises a basic particulate refractory material, a surfactant and a binder comprising alkali metal silicate or an alkali-stabilised aqueous solution of a phenolformaldehyde resol resin and as setting agent for the binder an ester in liquid form. The refractory composition is suitable for forming the inner lining of a molten metal handling vessel e.g. a continuous casting tundish.

## REFRACTORY COMPOSITIONS

This invention relates to refractory compositions for providing molten metal handling vessels with heat-insulating linings. The vessel may be for example a ladle, tundish or molten metal transfer channel such as a launder or furnace spout. The compositions are particularly suitable for providing a lining to be contacted by molten metal in the vessel and that lining may overlie a permanent refractory lining in the vessel, which has an outer shell, usually of metal e.g. steel.

According to the present invention there is provided a self-setting, foamed, basic, refractory composition comprising a basic particulate refractory material, surfactant and a binder system comprising:

a)   as binder, aqueous alkali metal silicate or an alkali-stabilised aqueous solution of a phenol-formaldehyde resol resin and

b)   as setting agent for the binder,
an ester in liquid form.


The refractory compositions of the
present invention are particularly suitable for
application directly onto the permanent refractory
lining of molten metal handling vessels. After
setting and drying and/or firing and in the case
of the resin binder system preferably firing,
the composition of the invention provides the
permanent.refractory with a highly erosion
resistant layer to protect it from the erosive
effects of molten metal and any accompanying
slag or covering flux.  The layer is also heat-
insulating in contrast to a typical permanent
lining.


In addition compositions of the invention
may be used to form preformed shapes e.g. one-
piece linings by moulding the compositions into
a required shape and allowing the compositions
to self-set.  The preformed shapes may then be
installed in molten metal handling vessels as
linings or parts of linings therefor.

The binder system in the composition of the present invention enables advantageous setting times to be obtained over a wide range of temperatures prevailing during the lining operation. The setting may take place at ambient temperatures or be assisted by higher temperatures e.g. if the composition is applied to a surface at an elevated temperature. In this connection adequate lining strength may be achieved within 30 to 220 minutes at temperatures from 0°C to 100°C. Preferably the binder system is such that the requisite strength is achieved within 40 to 60 minutes in the 12° to 30°C temperature range. The bench life of the self-setting composition may be from 4 to 15 minutes but typically is about 10 minutes.

According to a further aspect of the present invention there is provided a molten metal handling vessel having a heat-insulating lining formed from a self-setting composition of the invention.

The basic particulate refractory material is preferably calcined magnesite (which may be dead-burnt magnesite), calcined dolomite or mixtures thereof. The composition may contain other particulate refractory material in addition to the basic particulate refractory material but the latter forms at least 10% by weight of the total particulate refractory material. Other particulate material may be selected from one or more of olivine, zircon, alumina, calcined bauxite, chromite, corundum, other neutral oxides or silicates. The total amount of particulate refractory material present in the composition may be from 75 to 90% by weight, preferably 80 to 85% by weight. A proportion of the particulate refractory material present in the composition may be acidic e.g. silica.

The surfactant may be anionic, cationic, amphoteric or non-ionic. Preferred surfactants are the anionic ones e.g. long chain alkyl sulphates or alkyl ether sulphates. The quantity of surfactant used in the refractory compositions of the invention will vary with its character but generally will be from about 0.01 to 1.0% by weight surfactant solids.

The aqueous alkali metal silicate of the refractory composition according to the invention is preferably an aqueous sodium silicate having a solids content of 40 to 60% by weight and a $SiO_2$ : $Na_2O$ ratio of from 2 to 3:1. The alkali-stabilised aqueous solution of phenol-formaldehyde resol resin is preferably one which has been prepared by reacting together a monohydric phenol such as phenol or a cresol, or a dihydric phenol such as resorcinol or mixtures thereof, and formaldehyde under alkaline conditions. The molar ratio of phenol to formaldehyde will usually be from 1:1 to 1:3. The alkaline conditions are preferably established by adding sodium hydroxide or potassium hydroxide to an aqueous solution of the resin. The amount of alkali metal silicate employed is preferably from 1 to 5% by weight of silicate solids and the amount of resin employed is preferably 0.9 to 3% by weight of resin solids. The hardening or setting reaction of the alkali metal silicate or phenol-formaldehyde resol resin is effected by means of an ester in liquid form. The selection of the ester or esters provides a means of effecting a wide range of control over the setting reaction. Preferably the setting time is from 40 to 120 minutes.

The ester or mixture of esters may be, for example, selected from glycerol diacetate (diacetin), glycerol triacetate (triacetin), ethylene glycol diacetate, butylene glycol diacetate, propylene carbonate, $\gamma$-butyrolactone, $\varepsilon$-caprolactone or any other cyclic ester.

The amount of ester employed is preferably from 20 to 40% by weight of the quantity of phenol-formaldehyde resol resin used, more preferably about 30%, or, in the case of alkali metal silicate, the amount of ester is preferably from 8 to 20% by weight, more preferably about 12%. The ester or mixed esters used to set an alkali metal silicate may be selected from for example diacetin, triacetin or ethylene glycol diacetate.

Additionally a proportion of a sinter aid may be included in the refractory composition. This additive is of particular utility when a phenol-formaldehyde resol resin is used, as this binder is lower in residual alkali oxides than an alkali metal silicate and therefore may not itself provide a significant proportion of sinter aid. As sinter aid one or more of sodium borate, calcium tetraborate or powdered glass may be present in amounts upto 2% by weight of the refractory composition another sinter aid is ball clay which maybe present upto 6% by weight. Within these concentrations, the sinter aid enhances the integrity of the refractory composition, in use as a lining in a molten metal handling vessel, at the molten metal/lining interface.

The refractory compositions of the invention may also include upto 10% by weight of a particulate carbonaceous material e.g. graphite. It has been found that such carbonaceous material improves the erosion resistance of the composition when used in a continuous casting tundish particularly in the presence of aggressive i.e. highly erosive slags or covering fluxes. The use of this material also facilitates stripping of the inner lining after a casting sequence prior to the installation of a new lining. Also the

0189258

erosion resistance of linings made from the composition maybe enhanced by the inclusion of for example by, silicon carbide, silicon nitride or boron nitride.

The refractory compositions of the invention are particularly advantageous in that they enable a molten metal handling vessel e.g. a tundish to be lined or relined with an inner lining effectively.

The inner lining may be effected using the refractory compositions of the invention by any means suitable for handling foamed compositions, including trowelling. However, a particularly preferred method of lining a tundish is to pump, the self-setting, foamed, refractory composition e.g. by means of a worm pump into a gap defined between a removable former and the permanent refractory lining of the tundish. The gap defined by the former and permanent lining should preferably be at least 20 mm, more generally in the 30 to 50 mm range and typically about 35 mm. However, the former maybe adapted to provide for thicker sections to be formed in those areas which in use may encounter more severe erosion e.g. in the floor of a tundish or in a sidewall adjacent the slag line.  An adequate lining life may be achieved with such a thickness, e.g. in a continuous casting sequence the lining may last for upto 4 hours or more.  After use in a tundish or like vessel, the lining maybe stripped cleanly leaving only a minor amount of easily removable residual lining material.

The self-setting foamed, refractory composition of the invention may be formed by mixing the constituents thereof together in any order, although, generally it is preferred that the particulate refractory material should be first mixed with the surfactant followed by the ester or esters and lastly the aqueous alkali metal silicate or alkali-stabilised aqueous solution of phenol-formaldehyde resol resin.  It is generally preferred that the refractory composition should contain from about 10 to 20% of water.

The foamed composition once formed

0189258

may be applied by being pumped into the gap defined by the former and vessel and allowed to harden or set. In most applications 30 to 180 minutes will be satisfactory although 40 to 120 minutes will be generally preferred.

After setting the former is withdrawn and residual water is removed. This removal may be hastened by firing of the lining using gas burners at a temperature of about 700-1000°C.

On examination after firing a foamed structure remains affording enhanced insulation properties.

The density of the lining after firing maybe in the range 1-2 $g.cm^{-3}$. Optimum lining properties are generally obtained when the density of the lining is in the range 1.3-1.8 $g.cm^{-3}$.

According to another aspect of the present invention there is provided a method of forming a lining in a molten metal handling vessel which comprises inserting a former into the cavity of the vessel so as to define a gap therebetween corresponding in thickness to that of the lining to be formed and introducing into the gap a composition of the invention, until the gap between the former and the vessel is filled, allowing the composition to set, removing the former and heating the lining to remove substantially all the water retained by the lining after setting.

The composition of the invention may be introduced onto the floor of a molten metal handling vessel in an amount sufficient to cover the floor to the required thickness of lining prior to inserting the former and subsequently introducing the composition into the gap defined between the former and the vessel.

Compositions of the present invention are particularly advantageous for forming linings in situ in vessels having curved wall and/or floor sections such as round bottom tundishes.

The invention is more particularly described with reference to the following Examples.

## EXAMPLE 1

| Ingredient | % |
|---|---|
| Dead-burnt magnesite (Supplied by Radex GmbH, designated as Grade HBG Normal) | 85.4 |
| 0.8% solids solution of sodium alkyl sulphate (Average m.w. 260) | 10.2 |
| Glycerol triacetate | 1.0 |
| Alkali-stabilised aqueous solution of phenol-formaldehyde resol resin (solids content 60%) | 3.4 |

(Total water content 11.5%)

The magnesite and surfactant were added together in a planetary mixer and mixed for 2 minutes resulting in a foamed mixture, the glycerol triacetate was added to the foamed mixture and mixed for 1 minute followed lastly by the resin which was also mixed for 1 minute. The initial density of the foamed mixture after setting was 1.46 g.cm$^{-3}$. After subsequent drying and firing at 950°C for 1 hour, the density was 1.35 g.cm$^{-3}$.

Prior to drying and firing the foamed mixture was pumped using a worm pump manufactured by Putzmeister to provide a 40 mm thick inner lining in a laboratory scale 75 kg capacity tundish using a suitable wooden former. The ambient temperature was 20°C. The bench life of the composition was 10 minutes. The former was removed after 60 minutes. Molten steel and an accompanying highly erosive covering slag was charged into the tundish and held at 1550°C for 90 minutes the steel was continuously stirred during the holding period. At the end of the holding time the steel was emptied and the tundish allowed to cool. On inspection the area of the lining contacted by the slag had been eroded by between 10 to 15 mm whereas the erosion of the area of the lining contacted by the molten steel was 2 mm.

Having regard to the severity of the test conditions, these results indicate that the refractory composition yields good erosion resistance.

EXAMPLE 2

| Ingredient | % |
|---|---|
| Dead-burnt magnesite (As Example 1) | 81.2 |

1.5% solids solution of     9.7
sodium alkyl sulphate
(Average m.w. 260)

Aqueous sodium silicate     8.1
(50% solids content
$SiO_2 : Na_2O$ ratio 2:1)

Glycerol triacetate/        0.97
Glycerol diacetate
(70:30 parts by weight)

(Total water content 13.8%)

The ambient temperature was 20°C, the bench life of the foamed composition was 10 minutes and the former was removed after 70 minutes.

The experimental procedure described in Example 1 was substantially repeated, with the exception that an insulating covering powder was used in place of an aggressive slag.  On subsequent inspection of the lining the erosion at the slag line was 5 mm and 3 mm where contacted by the molten steel.

EXAMPLE 3

The composition of Example 1 was prepared with the exception that the glycerol triacetate was replaced by 1% by weight of a mixture of glycerol triacetate, propylene carbonate and Ɣ-butyrolactone in the weight proportions of 60:20:20 respectively. Laboratory trials showed that the bench life of the composition was 12 minutes and that the former was removable after 50 minutes.  The ambient temperature was 12°C.


EXAMPLE 4


The composition of Example 1 was prepared with the exception that the glycerol triacetate was replaced with an equal amount of glycerol triacetate and butylene glycerol diacetate in the ratio of 55:45 by weight. Laboratory trials showed that the bench life of the composition was 10 minutes and that the former was removable after 40 minutes.  The composition was tested against a surface having a temperature of 100°C.


EXAMPLE 5


The composition of Example 1 was prepared as described above and the resulting foamed mixture was pumped using a worm pump to provide a 50 mm thick lining in a 500 kg. capacity lip poured ladle using a suitable wooden former. The ambient temperature was 5°C. The bench life of the composition was 15 minutes. The former was removed after 180 minutes.

After initial setting the lining was dried and fired at 950°C for 4 hours using natural gas burners. The density of the lining was 1.76 g.cm$^{-3}$. Molten steel at 1680°C was poured into the preheated ladle and held for 5 minutes during which a fall in temperature on tapping of the steel of 40°C was noted. This steel was emptied and a second addition of molten steel was poured into the ladle which similarly was held for 5 minutes and then emptied.

0189258

CLAIMS

1.        A self-setting, foamed, refractory composition, characterised in that the composition is basic and comprises a basic particulate refractory material, a surfactant and a binder system comprising:-

>   a) as binder, aqueous alkali metal silicate or an alkali-stabilised aqueous solution of a phenol - formaldehyde resol resin and
>
>   b) as setting agent for the binder an ester in liquid form.

2.        A composition according to claim 1 characterised in that the basic particulate refractory material is one or more of calcined magnesite and calcined dolomite.

3.        A composition according to claim 1 or claim 2 characterised in that the basic particulate refractory material provides at least 10% by weight of the total refractory material present.

0189258

4.          A composition according to any of claims 1
to 3 characterised in that in addition to the basic
particulate refractory material, the composition
comprises one or more particulate refractory materials
selected from olivine, zircon, alumina, calcined
bauxite, chromite and corundum.

5.          A composition according to any preceding claim
characterised in that the proportion of particulate
refractory material is 75 to 90% by weight.

6.          A composition according to any preceding
claim characterised in that the surfactant is anionic.

7.          A composition according to claim 6
characterised in that the surfactant is a long chain
alkyl sulphate or alkyl ether sulphate.

8.          A composition according to claim 6 or claim
7 characterised in that the proportion of surfactant is
from 0.01 to 1.0% by weight surfactant solids.

9.          A composition according to any preceding
claim characterised in that the aqueous alkali metal
silicate is aqueous sodium silicate having a solids
content of 40 to 60% by weight and a $SiO_2:Na_2O$ ratio

0189258

of from 2 to 3:1.

10.    A composition according to claim 9
characterised in that the proportion of aqueous
sodium silicate is from 1 to 5% by weight.

11.    A composition according to any of claims
1 to 8 characterised in that the alkali-stabilised
aqueous solution of phenol-formaldehyde resol resin
has a molar ratio of phenol to formaldehyde of from
1:1 to 1:3.

12.    A composition according to claim 11
characterised in that the proportion of alkali-
stabilised aqueous solution of phenol-formaldehyde
resol resin is from 0.9 to 3% by weight resin solids.

13.    A composition according to any preceding
claim characterised in that the liquid ester is
selected from one or more of an ester of glycerol, an
ester of ethylene glycol, a carbonate ester and a
lactone.

0189258

14.        A composition according to claim 11 or claim 12 characterised in that the proportion of liquid ester is from 20 to 40% by weight of the resin.

15.        A composition according to claim 9 or claim 10 characterised in that the proportion of liquid ester is from 8 to 20% by weight of the silicate.

16.        A molten metal handling vessel characterised in that the vessel has an inner lining formed from a composition according to any of claims 1 to 15.

17.        A vessel according to claim 16 characterised in that the binder in the composition used to form the inner lining comprises an alkali-stabilised solution of a phenol-formaldehyde resol resin and the composition also contains a sinter aid.

18.        A vessel according to claim 17 characterised in that the sinter aid is selected from one or more of sodium borate, calcium tetraborate, powdered glass and ball clay.

19.        A vessel according to any of claims 16 to 18 characterised in that the vessel is a tundish.

20.      A method of providing an inner lining
in a molten metal handling vessel having a permanent
refractory lining characterised by pumping a
composition according to any of claims 1 to 15 into a
gap defined between a removable former and the
permanent refractory lining of the vessel, allowing
the composition to set, removing the removable former
and drying the inner lining to remove residual water.

21.      A shaped refractory, heat-insulating article,
for use in lining a molten metal handling vessel
characterised in that the article is in the form of a
foamed composition comprising basic particulate
refractory material bonded together by a binder
comprising an aqueous alkali metal silicate or an alkali-
stabilised aqueous solution of a phenol-formaldehyde
resol resin set by means of a liquid ester.